# EUROPÄISCHE PATENTSCHRIFT

(11) **EP 0 991 869 B1**
(45) Veröffentlichungstag und Bekanntmachung des Hinweises auf die Patenterteilung: **04.10.2001**
(21) Anmeldenummer: 98937527.4
(22) Anmeldetag: 20.06.1998
(51) Int. Cl.: F16C 33/24

(54) **GEROLLTE GLEITLAGERBUCHSE**
WRAPPED SLIDE BEARING BUSH
COUSSINET LISSE ENROULE

(30) Priorität: 03.07.1997 DE 19728497
(43) Veröffentlichungstag der Anmeldung: 12.04.2000
(73) Patentinhaber: KS Gleitlager GmbH, 68789 St. Leon-Rot (DE)
(72) Erfinder: BICKLE, Wolfgang, D-68799 Reilingen (DE); SCHUBERT, Werner, D-69168 Wiesloch (DE)
(74) Vertreter: Dreiss, Fuhlendorf, Steimle & Becker
(86) Internationale Anmeldenummer: EP9803786
(87) Internationale Veröffentlichungsnummer: WO9901675

(56) Entgegenhaltungen:
- EP-A- 0 632 208
- GB-A- 2 036 194
- PATENT ABSTRACTS OF JAPAN vol. 9, no. 205 (C-299), 22. August 1985 & JP 60 072952 A (THAIHOU KOGYO K.K. ), 25. April 1985
- PATENT ABSTRACTS OF JAPAN vol. 010, no. 345 (C-386), 20. November 1986 & JP 61 148238 A (NOK CORP), 5. Juli 1986
- PATENT ABSTRACTS OF JAPAN vol. 011, no. 307 (C-450), 7. Oktober 1987 & JP 62 095332 A (AISIN SEIKI CO LTD), 1. Mai 1987
- PATENT ABSTRACTS OF JAPAN vol. 007, no. 289 (C-202), 23. Dezember 1983 & JP 58 167697 A (ARAI SEISAKUSHO:KK), 3. Oktober 1983

## Beschreibung

Die Erfindung betrifft eine gerollte Gleitlagerbuchse aus einem Gleitlagerverbundwerkstoff mit einer metallischen Stützschicht, einer darauf aufgesinterten porösen Trägerschicht, und einer die Gleitfläche für einen Gleitpartner bildenden auf PTFE-Basis beruhenden Gleitschicht, die auch die Poren der Trägerschicht ausfüllt und wenigstens 60 Vol.% PTFE, 15 bis 25 Vol.% eines metallischen Füllstoffs, vorzugsweise Blei, und gegebenenfalls 8 bis 12 Vol.% PVDF umfasst.

Bei der auf PTFE-Basis beruhenden Gleitschicht soll das PTFE eine Matrix bildende Funktion ausüben; es muss also in einem solchen volumenprozentualen Anteil vorliegen, dass es den metallischen Füllstoff und das gegebenenfalls auch vorhandene PVDF umgeben kann. Wenn kein PVDF vorhanden ist, so soll der PTFE-Anteil wenigstens 70 Vol.% betragen.

Der metallische Füllstoff der Gleitschicht ist vorzugsweise Blei; es könnte aber beispielsweise auch Zinksulfid verwendet werden.

Die metallische Stützschicht besteht vorzugsweise aus Stahl, es könnte aber auch eine hochfeste Aluminiumlegierung oder Bronze zum Einsatz kommen. Die darauf aufgesinterte poröse Trägerschicht besteht vorzugsweise aus Zinnbronze oder Zinnbleibronze.

Derartige Gleitlagerbuchsen sowie die zugrundeliegenden Gleitlagerverbundwerkstoffe sind bekannt. So werden von der Anmelderin Gleitlagerbuchsen angeboten, deren Gleitschicht aus einer Mischung von 80 Vol.% PTFE und 20 Vol.% Blei gebildet ist. Desweiteren ist mit der EP 0 632 208 A1 ein Gleitlagerwerkstoff vorgeschlagen worden, dessen Gleitschicht 70 Vol.% PTFE und 20 Vol.% eines metallischen Füllstoffs sowie 10 Vol.% PVDF umfasst.

Gerollte Gleitlagerbuchsen aus den vorstehend beschriebenen Gleitlagerverbundwerkstoffen arbeiten an sich zufriedenstellend. Sie haben einen niedrigen Reibbeiwert oder Reibungskoeffizienten und zeichnen sich durch eine hohe Verschleißbeständigkeit aus.

Bei einer speziellen Anwendung gerollter Gleitlagerbuchsen in Stoßdämpfern von Kraftfahrzeugen ist die Anzahl der ständig auftretenden Lastwechsel im Laufe der Nutzungsdauer eines Kraftfahrzeugs außerordentlich hoch. Hierdurch wird im Laufe der Zeit die eigentliche Gleitschicht, also der Überstand der Gleitschicht über die poröse Trägerschicht, abgetragen, so dass die poröse Trägerschicht mit einzelnen Plateaus zu tragen beginnt. Die Gleitlagerbuchse verliert hierdurch nicht ihre Funktionsfähigkeit, es ändert sich jedoch das Dämpfungsverhalten, und der Reibbeiwert wird erhöht.

Hiervon ausgehend liegt der vorliegenden Erfindung die Aufgabe zugrunde, eine gerollte Gleitlagerbuchse bereitzustellen, die eine noch höhere Verschleißbeständigkeit aufweist und bei der der Reibbeiwert über längere Zeit unterhalb von 0,1 bleibt.

Diese Aufgabe wird bei einer gerollten Gleitlagerbuchse der eingangs beschriebenen Art erfindungsgemäß dadurch gelöst, dass die Gleitschicht 1 bis 3 Vol.% Kohlenstofffasern enthält und dass die Kohlenstofffasern im wesentlichen in einer Vorzugsrichtung zum Gleitlagerverbundwerkstoff ausgerichtet sind und die Relativgeschwindigkeit von Buchse und Gleitpartner im wesentlichen quer zu dieser Vorzugsrichtung verläuft.

Es wurde in erfindungsgemäßer Weise erkannt, dass durch Einbringen von Kohlenstofffasern im genannten volumenprozentualen Anteil in die Gleitschicht und dadurch, dass die Kohlenstofffasern eine Ausrichtung in einer Vorzugsrichtung erfahren, die so gewählt ist, dass sie quer zur bestimmungsgemäßen Relativbewegung der Gleitpartner verläuft, der Verschleiss verringert wird. Bei den Gleitpartnern handelt es sich um Buchse und Kolben bzw. Zylinderwand bei einer Anwendung in Stoßdämpfern oder von Buchse und darin drehbare Welle bzw. Zapfen bei einer Anwendung der Buchse in einer Drehlagerstelle.

Wenn vorstehend von einer Ausrichtung der Kohlenstofffasern im wesentlichen in oder zu einer Vorzugsrichtung gesprochen wird, so versteht es sich, dass die Kohlenstofffasern weder parallel zueinander im strengen Sinne ausgerichtet sein müssen noch dass jede einzelne Faser in dieser Vorzugsrichtung erstreckt sein muss. Es wird hierunter vielmehr verstanden, dass die Mehrzahl der Fasern eine Ausrichtung in dieser Vorzugsrichtung erfahren haben. Mehr als 50 % aller Fasern sind daher so ausgerichtet, dass sie mit der Vorzugsrichtung einen Winkel von weniger als 30°, einschließen. In ganz besonders vorteilhafter Weise sind die Kohlenstofffasern noch vollständiger bzw. weitgehender in der Vorzugsrichtung orientiert. Es wurde festgestellt, dass der Verschleiß bei einer nach der Erfindung gefertigten Buchse gegenüber den eingangs genannten Gleitlagerbuchsen herabgesetzt werden kann, wenn die späteren Reibpartner quer zur Erstreckung der Kohlenstofffasern, also zu dieser Vorzugsrichtung, gegeneinander laufen.

Bevorzugtermaßen haben die Kohlenstofffasern eine Länge von 50 - 300 *µ*m und eine Dicke von 5 - 20 *µ*m. In besonders vorteilhafter Weise beträgt die Länge 50 - 200 *µ*m und die Dicke 8 - 15 *µ* m. Es hat sich gezeigt, dass sich mit Kohlenstofffasern dieser Abmessung eine sehr weitgehende Ausrichtung der Kohlenstofffasern erreichen lässt, welche die Vorzugsrichtung bildet. Die demgemäß erzielten tribologischen Eigenschaften des Gleitlagerverbundwerkstoffs sind besonders gut.

Bei einer bevorzugten Ausführungsform der Erfindung umfasst die Gleitschicht einen Kohlenstofffaseranteil von 1,5 bis 2,5 Vol.% sowie einen Anteil metallischen Füllstoffs, vorzugsweise Blei, von 18 bis 22 Vol.%.

Die Vorzugsrichtung der Kohlenstofffasern wird in bevorzugtem Maße so gewählt, dass sie in Umfangsrichtung der Gleitlagerbuchse verläuft, wenn die Gleitlagerbuchse in einem Stoßdämpfer Verwendung finden soll. Bei dieser Anwendung ist die Buchse entweder in den Zylinder eingepresst und dient als Gleitpartner für einen hin- und hergehenden Kolben oder sie ist mit dem Kolben verschieblich und demzufolge mit einer radial äußeren Gleitschicht versehen und läuft mit dem Kolben in axialer Richtung gegen eine innere Zylinderfläche. Obschon die vorstehende Verwendung der erfindungsgemäßen Gleitlagerbuchse besonders bevorzugt wird, sind auch andere Anwendungen der Gleitlagerbuchse denkbar.

Die Vorzugsrichtung der Kohlenstofffasern wird parallel zur Buchsenlängsachse gewählt, wenn die Buchse in einer Drehlagerstelle eingesetzt werden soll.

Weitere Merkmale, Einzelheiten und Vorteile der Erfindung ergeben sich aus der bildlichen Darstellung von Schnitten durch den Verbundwerkstoff einer erfindungsgemäßen Gleitlagerbuchse und der Beschreibung einer vergleichenden Reibwertmessung. In der Zeichnung zeigt:
- Figur 1: eine photographische Ansicht des Gleitlagerverbundwerkstoff in Draufsicht auf die Gleitschicht;
- Figur 2: ein Schliffbild durch einen erfindungsgemäßen Gleitlagerverbundwerkstoff senkrecht zur Vorzugsrichtung;
- Figur 3: ein Schliffbild des Gleitlagerverbundwerkstoffs nach Figur 1 in der Vorzugsrichtung;
- Figur 4: eine Tabelle mit Ergebnissen einer Reibwertmessung; und
- Figur 5: die zeichnerische Darstellung der Ergebnisse der Reibwertmessung nach Figur 4.

Die Herstellung der Stahlstützschicht und der darauf aufgesinterten porösen Bronzeschicht ist an sich bekannt und bedarf daher keiner eingehenden Beschreibung. Das auf die poröse Bronzeschicht sowie in die Poren der porösen Bronzeschicht aufzubringende bzw. einzubringende Gleitschichtmaterial wird aus einer wässrigen PTFE-Dispersion hergestellt, der Toluol und Triton zugegeben wird. Die Mischung wird verrührt. Es wird sodann eine Zusammensetzung von mit PTFE beschichteten Kohlefasern, die unter dem Handelsnamen PDR 9650 von der Firma Dupont erhalten werden kann, zugegeben und eingerührt. In die PTFE-Mischung wird Aluminiumnitrat als Fällmittel eingegeben und in aufgeschlämmter Form vorliegendes Blei eingerührt. Die so erhaltene Mischung wird dann in die poröse Bronzeschicht eingewalzt, wobei die Dicke der Gleitschicht über den Spitzen oder Plateaus der Bronzeschicht etwa zwischen 5 und 50 *µ*m beträgt. Bevorzugtermaßen wird die Gleitschicht mit einem Überstand von 20 bis 25 *µ* m über den Spitzen oder Plateaus der Bronzeschicht aufgetragen. Bei einer derartigen Bemessung des Walzspalts können die Poren der Bronzeschicht einerseits vollständig mit dem Kunststoffgleitlagermaterial gefüllt werden, ohne dass das Bronzesintergerüst zusammengedrückt wird, und es wird beim Einwalzen eine der Umfangsrichtung der Walzen entsprechende Ausrichtung der Kohlenstofffasern erreicht.

Nach dem Einwalzen der Gleitschichtmischung wird der Gleitlagerverbundwerkstoff einer Temperaturbehandlung unterworfen. Wenn hiernach die Lösungsmittel verdampft sind, umfasst die Gleitschicht des hier betrachteten Gleitlagerverbundwerkstoffs 2 Vol.% Kohlenstofffasern, 20 Vol.% Blei und 78 Vol.% PTFE.

Zur Herstellung gerollter Gleitlagerbuchsen für Stoßdämpferanwendungen werden Platinenabschnitte in Walzrichtung geschnitten und demzufolge um eine hierzu senkrechte Achse gerollt, so dass die Vorzugsrichtung der Kohlenstofffasern in Umfangsrichtung der Buchse verläuft. Die Relativbewegung der Gleitpartner bei Stoßdämpferanwendungen verläuft somit quer bzw. senkrecht zur Ausrichtung der Fasern.

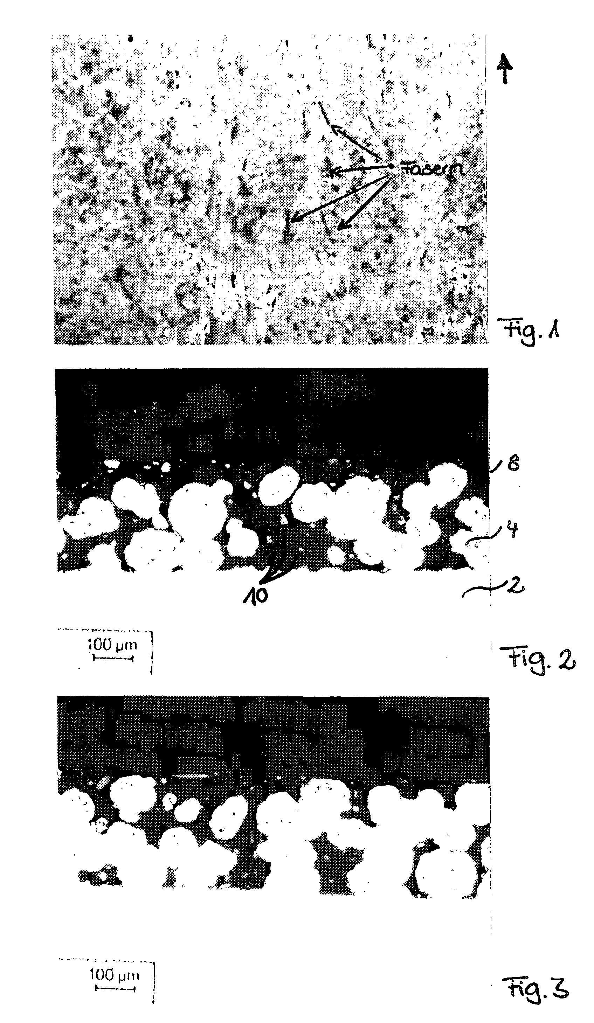

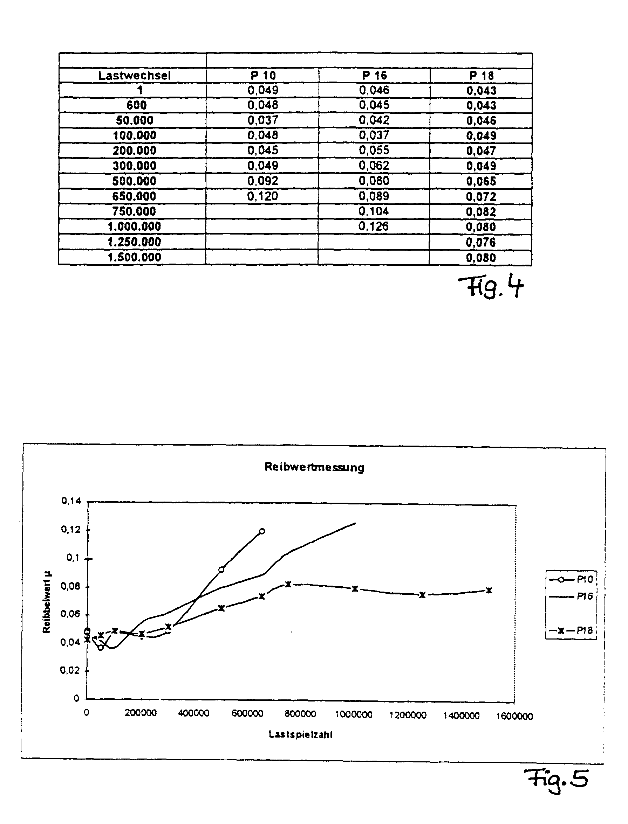

Figur 1 zeigt eine photographische Ansicht des erfindungsgemäßen Gleitlagerverbundwerkstoffs in Draufsicht auf die Gleitschicht. Man erkennt die dunklen linear erstreckten Fasern und die in der Darstellung nach Figur 1 von unten nach oben verlaufende Vorzugsrichtung. Figur 2 zeigt einen Querschliff und Figur 3 einen Längsschliff, der parallel zur Bandlaufrichtung verläuft. Eine aus Stahl bestehende Stützschicht des Gleitlagerverbundwerkstoffs ist mit dem Bezugszeichen 2 bezeichnet. Die poröse aufgesinterte Bronzeschicht ist mit dem Bezugszeichen 4 bezeichnet. Man erkennt in den Figuren die in einer Vorzugsrichtung orientierten Kohlenstofffasern, die in der insgesamt mit dem Bezugszeichen 8 bezeichneten die Poren der Trägerschicht 4 vollständig ausfüllenden auf PTFE Basis beruhenden Gleitschicht enthalten sind sowie den darin ebenfalls enthaltenen aus Blei bestehenden Füllstoff 10.

Es wurde eine Reibwertmessung durchgeführt, in der zwei Gleitlagerbuchsen aus dem eingangs genannten Gleitlagerverbundwerkstoff und eine nach der Erfindung hergestellte Gleitlagerbuchse miteinander verglichen werden. Die Buchse mit der Bezeichnung P10 weist eine Gleitschicht auf, die aus 80 Vol.% PTFE und 20 Vol.% Blei besteht; die Buchse mit der Bezeichnung P16 weist eine Gleitschicht auf, die aus 70 Vol.% PTFE, 20 Vol.% Blei und 10 Vol.% PVDF besteht, und die nach der Erfindung hergestellte Gleitlagerbuchse mit der Bezeichnung P18 weist eine Gleitschicht auf, die aus 78 Vol.% PTFE, 20 Vol.% Blei und 2 Vol.% Kohlenstofffasern besteht. Die Dicke der Gleitschicht oberhalb der Spitzen oder Plateaus der porösen Bronzeschicht beträgt jeweils 23 *µ*m. Die Buchsen wurden jeweils in einem Stoßdämpfer-Prüfstand getestet. Hierfür wurden die Buchsen in einem Dauerlauf zwei einander überlagerten Lastwechseln unterworfen, und zwar einem ersten Hub mit ± 40 mm, Frequenz 1 Hertz (sinusförmig) und einem zweiten Hub von ± 8 mm, Frequenz 12 Hertz (sinusförmig). Die Buchsen wurden hierfür in einem Zylinder eingespannt, und es wurde ein den Stoßdämpferkolben simulierender Schaft in der vorstehend beschriebenen Weise auf- und abbewegt. Der Schaft wurde hierbei mit einer Seitenlast von 2 N/mm² senkrecht zur Bewegungsrichtung belastet. Nach den aus der Tabelle nach Figur 4 ersichtlichen Lastwechseln wurde jeweils eine Reibwertmessung durchgeführt. Hierbei wurde der Schaft mit einer Frequenz von 0,08 Hertz (dreieckförmig) um ± 50 mm gegenüber der Buchse bewegt. Es wurde währenddessen eine Seitenlast von 4 N/mm² gewählt. Während dieser Reibwertmessung wurde die zum Verschieben des Schafts erforderliche Kraft gemessen und hieraus der Reibwert bestimmt. Dieser Reibwert ist aus Tabelle 3 ersichtlich und in der Figur 4 über der Lastwechselzahl aufgetragen. Man erkennt, dass die Gleitlagerbuchsen P10 und P16 oberhalb einer Lastwechselzahl von 500.000 bzw. 800.000 einen Reibwert von 0,1 überschreiten. Während die getesteten Buchsen in einem Lastwechselbereich bis 400.000 ein vergleichbares Verhalten zeigen, zeichnet sich die nach der Erfindung hergestellte Gleitlagerbuchse durch eine sehr viel höhere Verschleißbeständigkeit aus. Es kommt offenbar bis zu Lastwechselzahlen von 1,6 Mio nicht zu einem vollständigen Abtrag der Gleitschicht bis zu den Spitzen oder Plateaus der porösen Bronzeschicht und einer damit verbundenen Änderung des Dämpfungsverhaltens durch einen ansteigenden Reibbeiwert.

## Patentansprüche

1. Gerollte Gleitlagerbuchse aus einem Gleitlagerverbundwerkstoff mit einer metallischen Stützschicht (2), einer darauf aufgesinterten porösen Trägerschicht (4), und einer die Gleitfläche für einen Gleitpartner bildenden auf PTFE-Basis beruhenden Gleitschicht (8), die auch die Poren der Trägerschicht ausfüllt und wenigstens 60 Vol.% PTFE, 15 bis 25 Vol.% eines metallischen Füllstoffs (10), vorzugsweise Blei, und gegebenenfalls 8 bis 12 Vol.% PVDF umfasst, **dadurch gekennzeichnet, dass** die Gleitschicht 1 bis 3 Vol.% Kohlenstofffasern enthält, und **dass** die Kohlenstofffasern im wesentlichen in einer Vorzugsrichtung zum Gleitlagerverbundwerkstoff ausgerichtet sind und die Relativgeschwindigkeit von Buchse und Gleitpartner im wesentlichen quer zu dieser Vorzugsrichtung verläuft.

2. Gleitlagerbuchse nach Anspruch 1, **dadurch gekennzeichnet, dass** die Gleitschicht einen Kohlenstofffaseranteil von 1,5 bis 2,5 Vol.% aufweist.

3. Gleitlagerbuchse nach Anspruch 1 oder 2, **dadurch gekennzeichnet, dass** der Anteil metallischen Füllstoffs 18 bis 22 Vol.% beträgt.

4. Gleitlagerbuchse nach Anspruch 1, 2 oder 3, **dadurch gekennzeichnet, dass** die Vorzugsrichtung der Kohlenstofffasern in Umfangsrichtung der Gleitlagerbuchse verläuft.

5. Gleitlagerbuchse nach Anspruch 1, 2 oder 3, **dadurch gekennzeichnet, dass** die Vorzugsrichtung der Kohlenstofffasern parallel zur Buchsenlängsachse verläuft.

6. Gleitlagerbuchse nach einem der vorstehenden Ansprüche, **dadurch gekennzeichnet, dass** die Kohlenstofffasern eine Längserstreckung von 50 - 300 *µ*m, vorzugsweise von 50-200 *µ*m aufweisen.

7. Gleitlagerbuchse nach einem der vorstehenden Ansprüche, **dadurch gekennzeichnet, dass** die Kohlenstofffasern eine Dicke von 5 bis 20 *µ*m, vorzugsweise von 8 - 15 *µ*m aufweisen.

## Claims

1. Wrapped sliding bearing bush made of a sliding bearing composite material with a metal substrate (2), a porous support layer (4) sintered thereon, and a PTFE-based eliding layer (8) forming the sliding face of an associated sliding member, the sliding layer also filling the pores of the support layer and comprising at least 60 vol.% PTFE, 15 to 25 vol.% of a metal filler (10), preferably lead, and optionally 8 to 12 vol.% PVDF, **characterised in that** the sliding layer contains 1 to 3 vol.% carbon fibres, and **in that** the carbon fibres are oriented substantially in a preferred direction relative to the sliding bearing composite material and the relative speed of bush and associated sliding member extends substantially transverse to this preferred direction.

2. Sliding bearing bush according to claim 1, **characterised in that** the sliding layer has a carbon fibre content of 1.5 to 2.5 vol.%.

3. Sliding bearing bush according to claim 1 or 2, **characterised in that** the metal filler content is 18 to 22 vol.%.

4. Sliding bearing bush according to claim 1, 2 or 3, **characterised in that** the preferred direction of the carbon fibres extends in the peripheral direction of the sliding bearing bush.

5. Sliding bearing bush according to claim 1, 2 or 3, **characterised in that** the preferred direction of the carbon fibres extends parallel to the longitudinal axis of the bush.

6. Sliding bearing bush according to one of the preceding claims, **characterised in that** the carbon fibres have a longitudinal extension of 50 to 300 µm, preferably of 50 to 200 µm.

7. Sliding bearing bush according to one of the preceding claims, **characterised in that** the carbon fibres have a thickness of 5 to 20 µm, preferably of 8 to 15 µm.

## Revendications

1. Coussinet lisse enroulé en matériau composite pour palier lisse avec une couche d'appui métallique (2), une couche de support poreuse (4) agglomérée par frittage sur ladite couche d'appui, et une couche de glissement (8) à base de PTFE formant la surface de glissement d'un élément glissant antagoniste, ladite couche de glissement remplissant également les pores de la couche de support et comportant au moins 60 % en volume de PTFE, 15 à 25 % en volume d'une charge métallique (10), de préférence du plomb, et éventuellement 8 à 12 % en volume de PVDF, **caractérisé en ce que** la couche de glissement contient 1 à 3 % en volume de fibres de carbone, **en ce que** lesdites fibres de carbone sont essentiellement orientées dans une direction préférentielle par rapport au matériau composite pour palier lisse et **en ce que** la vitesse relative du coussinet et de l'élément glissant antagoniste est sensiblement perpendiculaire à ladite direction préférentielle.

2. Coussinet lisse selon la revendication 1, **caractérisé en ce que** la couche de glissement a une teneur en fibres de carbone comprise entre 1,5 et 2,5 % en volume.

3. Coussinet lisse selon la revendication 1 ou 2, **caractérisé en ce que** la teneur en charges métalliques est comprise entre 18 et 22 % en volume.

4. Coussinet lisse selon la revendication 1, 2 ou 3,
**caractérisé en ce que** la direction préférentielle des fibres de carbone est la direction circonférentielle du coussinet lisse.

5. Coussinet lisse selon la revendication 1, 2 ou 3,
**caractérisé en ce que** la direction préférentielle des fibres de carbone est parallèle à l'axe longitudinal du coussinet.

6. Coussinet lisse selon l'une des revendications précédentes,
**caractérisé en ce que** les fibres de carbone ont une longueur comprise entre 50 et 300 *µ*m, et de préférence entre 50 et 200 *µ*m.

7. Coussinet lisse selon l'une des revendications précédentes,
**caractérisé en ce que** les fibres de carbone ont une épaisseur comprise entre 5 et 20 *µ*m, et de préférence entre 8 et 15 *µ*m.
